# EUROPÄISCHE PATENTSCHRIFT

(11) **EP 1 783 195 B1**
(45) Veröffentlichungstag und Bekanntmachung des Hinweises auf die Patenterteilung: **16.09.2009**
(21) Anmeldenummer: 06023100.8
(22) Anmeldetag: 07.11.2006
(51) Int. Cl.: C10L 5/44

(54) **Verfahren zur Herstellung von Brennstoff aus Traubentrester, insbesondere in Form von Pellets**
Process for making fuel from grape marc, particularly in pellet form
Procédé de préparation d'un combustible à partir du marc de raisin, en particulier sous forme de granulés

(30) Priorität: 07.11.2005 DE 102005053351
(43) Veröffentlichungstag der Anmeldung: 09.05.2007
(73) Patentinhaber: RLP AgroScience GmbH, 67435 Neustadt/Weinstrasse (DE)
(72) Erfinder: Kubiak, Roland, Dr., 76829 Landau (DE); Pollatz, Thorsten, 76872 Winden (DE); Wolniewicz, Zbigniew, 67433 Neustadt/Wstr. (DE)
(74) Vertreter: Kesselhut, Wolf

(56) Entgegenhaltungen:
- EP-A- 1 471 132
- WO-A-20/04094584
- FR-A- 866 660
- US-B1- 6 190 716
- MASON NICHOLAS B ET AL: "FRUIT POMACE AS A FUEL" TRANSACTIONS OF THE AMERICAN SOCIETY OF AGRICULTURAL ENGINEERS, AMERICAN SOCIETY OF AGRICULTURAL ENGINEERS. ST.JOSEPH, MI, US, Bd. 28, Nr. 2, 1. März 1985 (1985-03-01), Seiten 588-591, XP009102417 ISSN: 0001-2351
- CAPPELLERI G: "Use of winemaking by-products = UTILISATION DES SOUS-PRODUITS DE LA VINIFICATION" BULLETIN DE L'OIV, PARIS, Bd. 54, Nr. 602, 1. Januar 1981 (1981-01-01), Seiten 336-349, XP009102369 ISSN: 0029-7127

## Beschreibung

Die folgende Erfindung betrifft ein Verfahren zur Herstellung von Brennstoff aus Traubentrester, insbesondere in Form von Pellets, gemäß dem Oberbegriff von Anspruch 1.

Bei der Wärmeerzeugung werden gegenwärtig bereits Pellets aus biogenen Festbrennstoffen, wie Holz, Rinde, Stroh oder Heu genutzt, die auch in Form von Industriepellets/Multipellets als Presslinge aus getrockneter, auf ca. 10-13 Gew.-Prozent Restfeuchte naturbelassener Biomasse wie Holz und/oder Mischungen mit anderen nachwachsenden Rohstoffen wie Schalen, Trester, pflanzlichen Rückstände usw. bestehen.

Hierbei ist es bekannt, den bei der Traubenverarbeitung anfallenden Rückstand, den so genannten Traubentrester, in einigen wenigen Großbetrieben als Heizstoff einzusetzen, um durch die dadurch verbundene Energiegewinnung weitere Aufbereitungsprozesse wie die Destillation und Trocknung ökonomischer zu gestalten (L. Jakob, J. Hamatschek, G. Scholten: Der Wein, 10. Auflage, Eugen Ulmer Verlag 1997, S. 324).

In der DE 27 29 379 C2 wird vorgeschlagen, bei der Herstellung eines Düngemittels aus Traubentrester durch aerobe Verrottung, die durch den Verrottungsprozess erzeugte Wärme zur Beheizung von Aufenthaltsräumen und Treibhäusern sowie zur Warmwasserbereitung zu verwenden. Nach Beendigung des Verrottungsprozesses werden die Traubenkerne durch Sieben abgetrennt, zermahlen und einer Nachverrottung unterworfen.

Eine weitere Technik der bioenergetischen Tresterverwertung ist die Erzeugung von Biogas aus Trester durch anaerobe Vergärung, bei der das erzeugte Biogas durch eine Vielzahl unterschiedlicher Möglichkeiten in bekannter Weise energetisch genutzt werden kann.

Weiterhin beschreibt die DE 101 16 144 A1 ein Verfahren zum Vergären von Biomasse, bei welchem man in einem ersten Schritt die stoßweise anfallende Biomasse wie Herbstlaub, bzw. Frucht- oder Traubentrester zerkleinert und in einem Fermenter aerob hydrolysiert oder bis auf einen Feststoffgehalt von in etwa 18 Gew.-Prozent entwässert und anschließend durch eine Erhöhung des pH-Wertes inertisiert. Die inertisierte Biomasse kann zum Zwecke der Gasgewinnung unmittelbar in einem zweitem Schritt anaerob behandelt sowie über längere Zeit gelagert werden.

Bei beiden der zuvor beschriebenen Verfahren wird nur ein Teil des energetischen Potentials des Traubentresters sowie der verarbeiteten Zusatzstoffe effizient genutzt.

Ein Verfahren zur Herstellung von Presslingen aus weinbaulichen Rückständen für die gezielte Energiegewinnung ist weiterhin aus der FR-A- 24 99 096 bekannt. Bei dem dort beschriebenen Verfahren wird als Hauptbestandteil des Festbrennstoffes u.a. das Schnittholz von Weinreben verwendet, wohingegen der ebenfalls beschriebene Traubentrester nur als Bindemittel neben Melasse eingesetzt wird.

Schließlich beschreibt die EP 02 47 285 B1 ein Verfahren zur Herstellung von Presslingen aus feuchtem Abfall/Trester, dem ein Trockenstoff mit einer Restfeuchte von 5 oder weniger Gew.- %, d.h. Gewichtsprozent, zugemischt wird, um die Pressfeuchtigkeit des Gemisches auf ungefähr 15% herabzusetzen. Zusätzlich wird dem Gemisch Trester aus Brauereien, Klärschlamm, Kalk oder Natronlauge beigemischt. Dies führt indirekt zu einem hohen Aschegehalt der Presslinge, was als Nachteil dieses Verfahren zu bewerten ist.

Ein weiteres Problem im Zusammenhang mit der bioenergetischen Verwertung von Rückständen bei Produkten aus dem Weinbau besteht darin, dass diese saisonbedingt dezentralisiert und in unterschiedlichen Mengen anfallen. Die angestrebte Qualität der Produkte und Effektivität der bisher entwickelten Prozesse führt hier zu zentralen und komplexen Verwertungsanlagen, die vor allem ein kostenintensives Ansammeln und Verteilen des Brennstoffs erfordern.

Hierbei wird die Menge, Zusammensetzung und Beschaffenheit der während der kurzen Kelterperiode anfallenden Traubentrester bekanntlich von der Art der Trauben- und Maischebehandlung, der Rebsorte sowie vom Reife- und Fäulnisgrad des Erntegutes bestimmt.

Generell werden die Traubentrester in zwei Arten unterteilt: den gegorenen Trester, der als Pressrückstand nach der Maischegehrung bei der Rotweinherstellung anfällt, sowie den ungegorenen Trester, der bei der Kelterung von frischen Weintrauben entsteht.

Der Traubentrester ist hierbei ein strukturreiches, heterogenes Gemisch und besteht im Allgemeinen zu ca. 40% aus Bestandteilen wie Beerenschalen, Kernen und Rappen. Den restlichen flüssigen Anteil bildet beim ungegorenen Trester der Traubenmost, und beim gegorenen Trester der Wein. Die in der flüssigen Phase des ungegorenen Tresters vorhandenen Trubbestandteile wie Fruchtfleischstücke, Pektine, Polyphenole, Eiweißstoffe, Glucane und Zuckerstoffe, welche in dispergierter oder kolloidaler Form vorliegen, bilden während der Trocknung schleimige, zähe und hochviskose Schichten und verhindern hierdurch ohne zusätzliche Maßnahmen die Entstehung eines homogenen, pelletierbaren Materials, dh. eines Materials, welches sich zu Pellets verarbeiten lässt.

Demgemäß ist es eine Aufgabe der vorliegenden Erfindung, ein Verfahren zur Herstellung eines Brennstoffs auf Basis von Traubentrester zu schaffen, der auch bei unterschiedlichen Arten und Sorten von anfallenden Traubentrestern und Rückständen aus dem Weinbau als Biobrennstoff hoher Qualität und geringer Ascheanteile in modernen Feuerungsanlagen zur häuslichen und innerbetrieblichen Wärmeversorgung eingesetzt werden kann.

Diese Aufgabe wird erfindungsgemäß durch die Merkmale von Anspruch 1 gelöst.

Weitere Merkmale der Erfindung sind in den Unteransprüchen enthalten.

Gemäß der Erfindung zeichnet sich das Verfahren zur Herstellung von Brennstoff aus Traubentrester mit den Verfahrensschritten
- Reinigen des Traubentresters,
- Trocknen des gereinigten Taubentresters,
- Zerkleinern des getrockneten Traubentresters unter mechanischer Freisetzung des in den Traubenkernen enthaltenen Kernöls,
- Vermischen des zerkleinerten Traubentresters mit dem freigesetzten Kernöl, und
- Verpressen des mit dem freigesetzten Kernöl vermischten
   Traubentresters in eine gewünschte Form, insbesondere in Pelletform,
dadurch aus, dass das Mischen und Verpressen innerhalb von 15 Tagen nach dem Zerkleinern vorgenommen wird.

Wie von den Anmeldern überraschenderweise in Pressversuchen gefunden wurde, wird unter Anwendung des erfindungsgemäßen Verfahrens die höchste Abrieb-, und/oder Bindungsfestigkeit des erfindungsgemäßen Brennstoffs, bzw. der Pellets aus dem Pressgut dann erreicht, wenn das zerkleinerte Pressgut weniger als 15 Tage zwischengelagert wird. Hierbei lässt sich der beobachtete Effekt dadurch erhöhen, wenn das Pressgut zuvor bei Temperaturen unterhalb von 60 °C getrocknet wird.

Das erfindungsgemäße Verfahren sieht vor, dass der Trester gegorener und/oder ungegorener Art in kompakten Mieten ohne Umsetzen oder Durchmischen, oder als Silage, gelagert wird, wobei die dickflüssigen Trubbestandteile und Weinreste unter den darin herrschenden Verhältnissen in wenigen Tagen weitgehend mikrobiell abgebaut werden. Dagegen bleibt ein Großteil des Trestermaterials auch über mehrere Wochen hinaus unverrottet und mit geringen Gärverlusten erhalten. Der somit gewonnene, teilweise verrottete Trester lässt sich unter Anwendung bekannter Trocknungstechnik aus dem landwirtschaftlichen Bereich mit niedrigem Energieaufwand, vorzugsweise im Freien, z.B. in einer flachen Schicht ausgebreitet, effektiv trocknen.

Bei der bevorzugten Ausführungsform des erfindungsgemäßen Verfahrens wird in vorteilhafter Weise nicht nur der gelagerte, sondern auch der frisch anfallende Trester bevorzugt ohne Zugabe von Wasser einer mechanischen Entwässerung unterzogen, um einen Tresterpresstrub zu erhalten, der anschließend durch alkoholische Gärung auf 5-10 Vol.-% Alkohol angereichert wird und dann als Rohstoff für die Herstellung von vermarktungsfähigen Produkten wie Biokraftstoff, Bioethanol, Industriealkohol, Weinsäure, Milchsäure und Biogas dient. Die mechanische Entwässerung wird schonend, ohne die Traubenkerne zu zerstören, beispielsweise mit einer konventionellen Schneckenpresse, durchgeführt. Der dabei gewonnene, bis auf einen Wassergehalt von insbesondere 45 bis 55 Gew.-% entwässerte Trester, wird unter Anwendung bekannter Trocknungstechniken, wie zum Beispiel unter Einsatz von Trommel-, Band-oder Umlufltrocknern, bevorzugt auch unter Nutzung von Abgaswärme aus einer Biomassheizanlage und/oder Biogasanlage weiter getrocknet, und anschließend in der zuvor beschriebenen Weise zu Brennstoffverarbeitet, wobei diese zweite Trockenstufe bevorzugt unter Einsatz von Wärme erfolgt.

Darüber hinaus können zur weiteren Steigerung der Qualität, bzw. zur Qualitätssicherung des nach dem erfindungsgemäßen Verfahren erzeugten Brennstoffs fehlerhaften Chargen des Brennstoffes, besonders mit niedriger Binde- und Abriebfestigkeit, nach Zugabe von 10- 20 Gew.-% abgesiebten und zerkleinerten Traubenkemen und/oder nach Zugabe von 30-50 Gew.-% getrocknetem Trester und/oder nach Zugabe von 5-10 Gew.-% des frischen Presskuchens aus der Traubenkernölherstellung erneut zu Pellets verpresst werden.

In einer vorteilhaften alternativen Ausführungsform der Erfindung werden aus dem gelagerten Traubentrester noch vor der Trocknung die Mineralstoffe mittels Wasser ausgewaschen, wobei die entstandene Lösung aufgrund des hohen Nährstoffgehaltes ein brauchbares, flüssiges Düngemittel darstellt. In gleicher Weise kann es vorgesehen sein, die Mineralstoffe, sowie auch sonstige Verunreinigungen des Tresters durch Aussieben, z.B. mittels bekannter Klassiersiebe vor und/oder nach dem Zerkleinern, zu entfernen, wodurch sich der Aschegehalte bei der Verbrennung des erfindungsgemäßen Brennstoffs sowie auch der Feinstaubgehalt in den Abgasen in vorteilhafter Weise senken lässt.

In einem weiteren Schritt des erfindungsgemäßen Verfahrens wird das bis auf 15% Feuchtigkeit oder gar darunter getrocknete Trestermaterial einer Zerkleinerung mittels z.B. einer Getreidequetsche oder einer Schrotmühle unterworfen, bei welcher die unverrotteten Traubenkerne geöffnet und die in ihnen eingeschlossenen bindefähigen, öligen Substanzen freigesetzt werden. Durch diesen Vorgang werden die Partikel und Bruchstücke des Tresters sehr gut mit dem freigesetzten Kernöl benetzt, und dadurch eine hohe Festigkeit sowie eine Herabsetzung der Wasseraufnahmefähigkeit des erfindungsgemäßen Brennstoffs erhalten, was insbesondere dann von besonderem Vorteil ist, wenn der Brennstoff in Form von bekannten Pellets bereitgestellt wird, die aufgrund ihrer geringen Größe eine z.B. gegenüber einer Brikettform erheblich vergrößerte Oberfläche, und damit eine von vorn herein größere Neigung zur Aufnahme von Feuchtigkeit aufweisen.

Da der Traubentrester kein gleichartiger, homogener Ausgangsstoff ist, und einen stark differierenden Gehalt an faserigen Bestandteilen aufweist - der als Lignin erfasst wird-, werden dem zerkleinerten Trestermaterial bei der bevorzugten Ausführungsform der Erfindung in einem anschließenden Aufbereitungsschritt je nach Zusammensetzung bevorzugt faserige Stoffe bis zu 30 Gew.- % beigemengt, um aus allen Tresterarten gleichermaßen bruch- und abriebfeste Pellets herzustellen.

Als holzartiger Faserstoff können Holzsägemehl und/oder Holzspäne von Laub- und Nadelbäumen und/oder zerkleinerte und getrocknete, im Weinberg anfallende pflanzliche Rückstände wie z.B. Rodeholz, Laub- und Rebschnitt, beigemischt werden.

Bei der vorliegenden Erfindung erweist es sich als besonders vorteilhaft, wenn dem getrockneten Trester vor der Zerkleinerung nur ein Teil des holzartigen Faserstoffs, z.B. zwischen 5 und 10 Gew.- % des holzartigen Faserstoffs im fertigen Endprodukt, hinzugefügt wird, welcher bevorzugt anschließend zusammen mit dem Trestermaterial zerkleinert, mit diesem vermischt und dadurch ebenfalls mit Kernöl benetzt wird. Um die Pelletierbarkeit des zerkleinerten und gemischten Materials zu verbessern, wird anschließend die übrige Menge an Faserstoffen von bis zu 25% beigemengt und die gesamte Masse im Anschluss daran - je nach gewünschter Form und Größe des Endprodukts - einer bekannten Presseinrichtung, wie z.B. einer Pelletierpresse, einer Brikettpresse oder einer sonstigen Presse zugeführt.

Im Falle von Traubentrester mit einem niedrigen Kernanteil von unter 10 Gew.- % und einer erhöhten Mengen an faserigen Stoffen, wie z.B. verholzten Rappen, kann erfindungsgemäß auf Zugabe von holzartigen Faserstoffen verzichtet werden und die Bindefestigkeit der Pellets dadurch gesichert werden, dass dem zu verpressenden Material gebräuchliche pflanzliche Bindemittel wie Getreide- oder Kartoffelstärke, Roggenkleie oder Melasse im Ausmaß bis zu 10 Gew.- % zugesetzt werden.

Die Herstellung der Presslinge wird im Falle von Pellets bevorzugt in einer bekannten Ring-oder Flachmatrizenpresse durchgeführt, in der das zu agglomerierende Pressgut von Kollerrollen durch die Fonnkanäle der Matrize gepresst wird. Abschließend werden die Pellets gekühlt und gelagert.

Durch das Pelletieren nach dem erfindungsgemäßen Verfahren wird aus dem Trauben-trester ein qualitativ hochwertiger Festbrennstoff erzeugt, dessen Brennwert sogar höher ist, als bei herkömmlichen Holzpellets. Als vollwertiges und sinnvolles Substitut für fossile Brennstoffe weisen alle nach dem erfindungsgemäßen Verfahren hergestellten Pellets bei der Verwendung als Brennstoff in Heizanlagen die vorteilhaften Merkmale auf, wie z.B. bequemes und sauberes Handling, gute Dosierfähigkeit, platzsparende Lagerung und hohe Energiedichte.

Bei dem erfindungsgemäßen Verfahren ist es weiterhin möglich, die einzelnen Herstellungsschritte wie Trocknung, Zerkleinerung und Pelletierung wahlweise mittels stationären oder mobilen Anlagen durchzuführen.

## Patentansprüche

1. Verfahren zur Herstellung von Brennstoff aus Traubentrester mit den Verfahrensschritten:
- Reinigen des Traubentresters,
- Trocknen des gereinigten Taubentresters,
- Zerkleinern des getrockneten Traubentresters unter mechanischer Freisetzung des in den Traubenkernen enthaltenen Kernöls,
- Vermischen des zerkleinerten Traubentresters mit dem freigesetzten Kemöl, und
- Verpressen des mit dem freigesetzten Kemöl vermischten Traubentresters in eine gewünschte Form, insbesondere in Pelletform,
**dadurch gekennzeichnet,dass**
das Mischen und Verpressen innerhalb von 15 Tagen nach dem Zerkleinern des Traubentresters erfolgt.

2. Verfahren nach Anspruch 2,
**dadurch gekennzeichnet,dass**
der Traubentrester bei einer Temperatur unterhalb von 60°C getrocknet wird.

3. Verfahren nach Anspruch 1 oder 2,
**dadurch gekennzeichnet,dass**
der Traubentrester bis zu einem Restgehalt an Feuchtigkeit von 15 Gew.- % getrocknet wird.

4. Verfahren nach einem der Ansprüche 1 bis 3,
**dadurch gekennzeichnet,dass**
der Traubentrester zuerst einer mechanischen Entwässerung unterzogen und anschießend durch thermische Trocknung oder Umlufttrocknung getrocknet wird.

5. Verfahren nach Anspruch 4,
**dadurch gekennzeichnet, dass**
der Traubentrester mechanisch bis auf einen Wassergehalt von 35 bis 70 Gew.-%, insbesondere 45 bis 55 Gew.-% entwässert wird.

6. Verfahren nach Anspruch 5,
**dadurch gekennzeichnet,dass**
der bei der mechanischen Entwässerung erhaltene Tresterpresstrub durch alkoholische Gärung auf 5-10 Vol.-% Alkohol angereichert und als Rohstoff fiir die Herstellung von Biokraftstoff, Bioethanol, Industriealkohol, Weinsäure, Milchsäure und/oder Biogas verwendet wird.

7. Verfahren nach einem der vorhergehenden Ansprüche ,
**dadurch gekennzeichnet, dass**
der Traubentrester unverrotteten Traubentrester enthält.

8. Verfahren nach Anspruch 1,
**dadurch gekennzeichnet,dass**
der Traubentrester zur Entfernung von wasserlöslichen Mineralstoffen vor seiner Trocknung mit Wasser gewaschen wird.

9. Verfahren nach einem der vorhergehenden Ansprüche,
**dadurch gekennzeichnet,dass**
der Traubentrester zur Entfernung von festen Verunreinigungen vor und/oder nach seiner Zerkleinerung durch eine Siebeinrichtung, insbesondere ein Klassiersieb, gesiebt wird.

10. Verfahren nach einem der vorhergehenden Ansprüche,
**dadurch gekennzeichnet,dass**
der getrocknete Traubentrester vor dem Zerkleinern mit holzartigen Faserstoffen vermischt wird.

11. Verfahren nach Anspruch 10,
**dadurch gekennzeichnet,dass**
der Anteil an holzartigen Faserstoffen im Bereich von 5 bis 10 Gew.- %, bezogen auf das Gesamtgemisch, liegt.

12. Verfahren nach einem der vorhergehenden Ansprüche,
**dadurch gekennzeichnet,dass**
dem zu verpressenden getrockneten und zerkleinerten Traubentrester bezogen auf das Gesamtgemisch zusätzlich bis zu 10 Gew.- % pflanzliche Zusatzstoffe wie Getreide- und/oder Kartoffelstärke und/oder Roggenkleie beigemischt werden.

13. Brennstoff, insbesondere in Form von Pellets, der durch Verpressen von ölhaltige Traubenkerne aufweisendem Traubentrester gewonnen wird,
**dadurch gekennzeichnet,dass**
dieser durch Anwendung des Verfahrens nach einem der vorhergehenden Ansprüche erhalten wird.

## Claims

1. Method for the manufacture of fuel from grape pulp with the process steps:
- Cleaning of the grape pulp,
- Drying of the cleaned grape pulp,
- Crushing of the dried grape pulp with mechanical release of the grape seed oil contained in the grape seeds,
- Mixing of the crushed grape pulp with the released grape seed oil, and
- Pressing of the grape pulp mixed with the released grape seed oil into a desired form, in particular in pellet form,
**characterised in that**
the mixing and pressing takes place within 15 days after the crushing of the grape pulp.

2. Method according to claim 2,
**characterised in that**
the grape pulp is dried at a temperature below 60°C.

3. Method according to claim 1 or 2,
**characterised in that**
the grape pulp is dried to a residual moisture content of 15% by weight.

4. Method according to one of the claims 1 to 3,
**characterised in that**
the grape pulp is first subjected to mechanical drainage and is then dried by thermal drying or by circulating air drying.

5. Method according to claim 4,
**characterised in that**
the grape pulp is mechanically drained down to a water content of 35 - 70% water content by weight, in particular 45 - 55% by weight.

6. Method according to claim 5,
**characterised in that** the grape pulp product obtained by the mechanical draining is enriched by alcoholic fermentation to 5 -10% alcohol by volume and is used as a raw material in the manufacture of bio fuels, bio ethanol, industrial alcohol, tartaric acid, lactic acid and/or biogas.

7. Method according to one of the foregoing claims,
**characterised in that**
the grape pulp contains unrotted grape pulp.

8. Method according to claim 1,
**characterised in that**
the grape pulp is washed with water before drying
to remove water-soluble mineral substances.

9. Method according to one of the foregoing claims,
**characterised in that**
before and/or after crushing, the grape pulp is sieved
through a screen, in particular a sizing screen.

10. Method according to one of the foregoing claims,
**characterised in that** the dried grape pulp is mixed with wood-type fibre material before crushing.

11. Method according to claim 10,
**characterised in that**
the proportion of wood-type fibre material is in the range of 5 to 10%
by weight, based on the total mixture.

12. Method according to one of the foregoing claims,
**characterised in that**
the grape pulp to be pressed, dried and crushed based on the overall mixture is additionally mixed with up to 10% by weight of vegetable additives such as grain and/or potato starch and/or rye bran.

13. Fuel, in particular in the form of pellets, which are obtained by pressing oil-containing grape seeds from grape pulp,
**characterised in that**
these are obtained through the application of the method in accordance with one of the foregoing claims.

## Revendications

1. Procédé pour la fabrication d'un combustible à partir de marc de raisin, comprenant les étapes opératoires :
- de purification du marc de raisin ;
- de séchage du marc de raisin purifié ;
- de broyage du marc de raisin séché avec libération mécanique de l'huile de pépins de raisin que contiennent les pépins de raisin ;
- de mélange du marc de raisin broyé avec l'huile de pépins de raisin libérée ; et
- de pressage du marc de raisin mélangé avec l'huile de pépins de raisin libérée pour obtenir une forme désirée, en particulier une forme de tourteaux
**caractérisé en ce que**
le mélange et le pressage ont lieu dans un laps de temps de 15 jours après le broyage du marc de raisin.

2. Procédé selon la revendication 1,
**caractérisé en ce que**
le marc de raisin est séché à une température inférieure à 60 °C.

3. Procédé selon la revendication 1 ou 2,
**caractérisé en ce que**
le marc de raisin est séché jusqu'à obtenir une teneur résiduelle en humidité de 15 % en poids.

4. Procédé selon l'une quelconque des revendications 1 à 3,
**caractérisé en ce que**
le marc de raisin est d'abord soumis à une déshydratation mécanique avant d'être séché via un séchage thermique ou un séchage par circulation d'air.

5. Procédé selon la revendication 4,
**caractérisé en ce que**
le marc de raisin est soumis à une déshydratation mécanique jusqu'à obtenir une teneur en eau s'élevant de 35 à 70 % en poids, en particulier de 45 à 55 % en poids.

6. Procédé selon la revendication 5,
**caractérisé en ce que**
la lie de pressage du marc obtenue lors de la déshydratation mécanique est enrichie par fermentation alcoolique pour atteindre une teneur en alcool de 5 à 10 % en volume et est utilisée comme matière première pour la fabrication de biocarburant, de bioéthanol, d'alcool industriel, d'acide tartrique, d'acide lactique et/ou de biogaz.

7. Procédé selon l'une quelconque des revendications précédentes,
**caractérisé en ce que**
le marc de raisin contient du marc de raisin non pourri.

8. Procédé selon la revendication 1,
**caractérisé en ce que**
le marc de raisin est lavé avec de l'eau avant son séchage pour en éliminer les substances minérales solubles dans l'eau.

9. Procédé selon l'une quelconque des revendications précédentes,
**caractérisé en ce que**
le marc de raisin est soumis à un tamisage à travers un dispositif de tamisage, en particulier un dispositif de calibrage, pour en éliminer les impuretés solides, avant et/ou après son broyage.

10. Procédé selon l'une quelconque des revendications précédentes,
**caractérisé en ce que**
le marc de raisin séché est mélangé avec des substances fibreuses semblables au bois, avant son broyage.

11. Procédé selon la revendication 10,
**caractérisé en ce que**
la fraction de substances fibreuses semblables au bois se situe dans la plage de 5 à 10 % en poids, rapportée au mélange total.

12. Procédé selon l'une quelconque des revendications précédentes,
**caractérisé en ce que**
l'on ajoute par mélange au marc de raisin séché et broyé, qui doit être pressé, des additifs d'origine végétale comme par exemple de l'amidon de blé et/ou de pomme de terre et/ou du son de seigle, à concurrence d'une valeur s'élevant jusqu'à 10 % en poids, rapportés au mélange total.

13. Combustible, en particulier sous la forme de tourteaux, que l'on obtient par pressage du marc de raisin présentant des pépins de raisin contenant de l'huile,
**caractérisé en ce que**
le marc de raisin est obtenu par la mise en oeuvre du procédé selon l'une quelconque des revendications précédentes.
